# EUROPEAN PATENT APPLICATION

(11) **EP 3 846 044 A1**
(43) Date of publication of application: **07.07.2021**
(21) Application number: 19905625.0
(22) Date of filing: 13.12.2019
(51) Int. Cl.: G06F 16/11

(54) **BLOCK DATA ARCHIVING METHOD AND RELATED DEVICE**

(30) Priority: 29.12.2018 CN 201811639788
(71) Applicant: HUAWEI TECHNOLOGIES CO., LTD., Shenzhen, Guangdong 518129 (CN)
(72) Inventor: LUO, Yulong, Shenzhen, Guangdong 518129 (CN); DING, Jian, Shenzhen, Guangdong 518129 (CN); LI, Hanlin, Shenzhen, Guangdong 518129 (CN)
(74) Representative: Grünecker Patent- und Rechtsanwälte PartG mbB
(86) International application number: PCT/CN2019/125052
(87) International publication number: WO 2020/135094

(57) **Abstract**

A block data archiving method and a related device are provided. The method includes: determining, by a first blockchain node, to-be-archived block data when detecting that a resource of a block stored in the first blockchain node meets a block data archiving condition; sending, by the first blockchain node, an archiving request to a blockchain node in a same group one or more other blockchain nodes; negotiating, by the first blockchain node, a consensus with the blockchain node in the same group based on received consensus response information fed back by the blockchain node in the same group one or more other blockchain nodes; and sending, by the first blockchain node, the to-be-archived block data to a third-party storage server for archiving if it is determined that a consensus is reached and a consensus result that the first blockchain node is a consensus blockchain node is obtained, where the consensus result is used to determine that the first blockchain node or any one of blockchain nodes in the same group is a consensus blockchain node. In the foregoing process, a same piece of archived data is shared between a plurality of blockchain nodes, thereby avoiding redundant backup, and effectively improving implementation efficiency, operability, and flexibility of data archiving.

## Description

This application claims priority to Chinese Patent Application No. 201811639788.5, filed with the Chinese Patent Office on December 29, 2018 and entitled "BLOCK DATA ARCHIVING METHOD AND RELATED DEVICE", which is incorporated herein by reference in its entirety.

### TECHNICAL FIELD

This application relates to the field of blockchain technologies, and in particular, to a block data archiving method and a related device.

### BACKGROUND

A blockchain is a distributed ledger that maintains a chain structure of data blocks to maintain continuously growing, shareable, and untamperable data records. Data archiving is to clear or reorganize outdated or redundant data or package the data for storage in one or more other blockchain nodes, to reclaim disk space and reduce storage overheads. With the popularization and promotion of blockchain technologies, blockchain-based blockchain data archiving technologies are gradually developed.

An existing blockchain data archiving manner is as follows: First, a block height value and an access frequency of data in a blockchain node in a blockchain are periodically detected. When a quantity of locally stored block data exceeds a preset value, it is considered that an archiving condition is met. Then, the block data that meets the archiving condition is compressed and copied from the local blockchain node. Finally, a file hash and additional information of a compressed package are inserted into an archive file hash table for data query.

However, when data is archived in the foregoing manner, each blockchain node in a blockchain system needs to back up archived data of the local blockchain node, resulting in backup redundancy, which consumes network and storage resources, increases operation costs, and lowers data archiving efficiency. In addition, flexibility of data archiving is lowered because the archiving condition is limited to a block height and an access frequency.

### SUMMARY

In view of this, embodiments of this application provide a block data archiving method and a related device, to resolve a problem of low efficiency and flexibility of blockchain data archiving.

The embodiments of this application provide the following technical solutions:

A first aspect of the embodiments of this application discloses a block data archiving method. The method includes:
determining, by a first blockchain node, to-be-archived block data when detecting that a resource of a block stored in the first blockchain node meets a block data archiving condition;
sending, by the first blockchain node, an archiving request to one or more other blockchain nodes;
negotiating, by the first blockchain node, a consensus with the one or more other blockchain nodes based on received consensus response information fed back by the one or more other blockchain nodes; and
sending, by the first blockchain node, the to-be-archived block data to a third-party storage server for archiving if it is determined that a consensus is reached and a consensus result that the first blockchain node is a consensus blockchain node is obtained, where the consensus result is used to determine that the first blockchain node or any one of the one or more other blockchain nodes is a consensus blockchain node.

In the foregoing solution, any blockchain node determines to-be-archived block data when detecting that a resource of a block stored in the any blockchain node meets a block data archiving condition, sends an archiving request to one or more other blockchain nodes, receives consensus response information fed back by the one or more other blockchain nodes, and negotiates a consensus with the one or more other blockchain nodes based on the consensus response information. A current blockchain node sends to-be-archived block data to a third-party storage server for archiving if it is determined that a consensus is reached and a consensus result that the current blockchain node is a consensus blockchain node is obtained. The consensus result is used to determine that the current blockchain node or any one of the one or more other blockchain nodes is a consensus blockchain node. In the foregoing process, a same piece of archived data is shared between a plurality of blockchain nodes, thereby avoiding redundant backup, and effectively improving implementation efficiency, operability, and flexibility of data archiving.

In a possible design, the determining, by a first blockchain node, to-be-archived block data when detecting that a resource of a block stored in the first blockchain node meets a block data archiving condition includes:
monitoring, by the first blockchain node, whether a quantity of blocks stored in the first blockchain node is greater than a preset block quantity; and
if the quantity of blocks stored in the first blockchain node is greater than the preset block quantity, determining that the block data archiving condition is met, and obtaining the to-be-archived block data; or
monitoring, by the first blockchain node, whether a resource usage of the block stored in the first blockchain node is greater than a preset usage, where the block resource usage is an absolute value of disk space occupied by the stored block; and
if the resource usage of the block stored in the first blockchain node is greater than the preset usage, determining that the block data archiving condition is met, and obtaining the to-be-archived block data; or
monitoring, by the first blockchain node, whether a resource usage rate of the block stored in the first blockchain node is greater than a preset usage rate, where the block resource usage rate is a relative value of disk space occupied by the stored block; and
if the resource usage rate of the block stored in the first blockchain node is greater than the preset usage rate, determining that the block data archiving condition is met, and obtaining the to-be-archived block data; or
monitoring, by the first blockchain node, a creation time of the block stored in the first blockchain node, to determine whether there is a block whose creation time is greater than a preset time; and
if there is the block whose creation time is greater than the preset time, determining that the block data archiving condition is met, and obtaining data of the block whose block creation time is greater than the preset time.

In a possible design, the sending, by the first blockchain node, an archiving request to one or more other blockchain nodes includes:
sending, by the first blockchain node, an archiving request to a blockchain node in a same group, or sending, by the first blockchain node, an archiving request to a blockchain node in a same group and a blockchain node in another group in the blockchain.

In a possible design, the negotiating, by the first blockchain node, a consensus with the blockchain node in the same group based on received consensus response information fed back by the blockchain node includes:
obtaining, by the first blockchain node, consensus negotiation information in the consensus response information, and comparing the consensus negotiation information with consensus negotiation information of the first blockchain node, where the consensus negotiation information includes the to-be-archived block data, information about whether the to-be-archived block data is consistent, and a specific consensus blockchain node; and
if a comparison result is consistent, determining that the consensus is reached, and determining a specific consensus blockchain node based on the consensus negotiation information.

In a possible design, the method further includes:
receiving, by the first blockchain node, an archiving result fed back by the third-party storage server; and
sending, by the first blockchain node, the archiving result to the one or more other blockchain nodes.

In a possible design, the method further includes:
receiving, by a second blockchain node, an archiving request sent by a first blockchain node, where the second blockchain node and the first blockchain node are blockchain nodes in a same blockchain;
determining, by the second blockchain node, to-be-archived block data when finding, based on the archiving request, that a resource of a block stored in the second blockchain node meets a block data archiving condition;
feeding back, by the second blockchain node, consensus response information to the first blockchain node, and negotiating a consensus with one or more other blockchain nodes based on the consensus response information; and
sending, by the second blockchain node, the to-be-archived block data to a third-party storage server for archiving if it is determined that a consensus is reached, and a consensus result that the second blockchain node is a consensus blockchain node is obtained, where the consensus result is used to determine that the first blockchain node or any one of the one or more other blockchain nodes is a consensus blockchain node.

In a possible design, the determining to-be-archived block data when finding, based on the archiving request, that a resource of a block stored in the second blockchain node meets a block data archiving condition includes:
after receiving the archiving request, querying, by the second blockchain node, whether a quantity of blocks stored in the second blockchain node is greater than a preset block quantity; and
if the quantity of blocks stored in the second blockchain node is greater than the preset block quantity, determining that the block data archiving condition is met, and obtaining the to-be-archived block data; or
after receiving the archiving request, querying, by the second blockchain node, whether a resource usage of the block stored in the second blockchain node is greater than a preset usage, where the block resource usage is an absolute value of disk space occupied by the stored block; and
if the resource usage of the block stored in the second blockchain node is greater than the preset usage, determining that the block data archiving condition is met, and obtaining the to-be-archived block data; or
after receiving the archiving request, querying, by the second blockchain node, whether a resource usage rate of the block stored in the first blockchain node is greater than a preset usage rate, where the block resource usage rate is a relative value of disk space occupied by the stored block; and
if the resource usage rate of the block stored in the second blockchain node is greater than the preset usage rate, determining that the block data archiving condition is met, and obtaining the to-be-archived block data; or
after receiving the archiving request, querying, by the second blockchain node, for a creation time of the block stored in the second blockchain node, to determine whether there is a block whose creation time is greater than a preset time; and
if there is a block whose creation time is greater than the preset time, determining that the block data archiving condition is met, and obtaining data of the block whose block creation time is greater than the preset time.

In a possible design, the feeding back, by the second blockchain node, consensus response information to the first blockchain node, and negotiating a consensus with one or more other blockchain nodes based on the consensus response information includes:
feeding back, by the second blockchain node, the consensus response information to the first blockchain node, where the consensus response information includes consensus negotiation information, and the consensus negotiation information includes the to-be-archived block data, information about whether to-be-archived block data is consistent, and a specific consensus blockchain node;
comparing, by the second blockchain node, the consensus negotiation information with consensus negotiation information of the one or more other blockchain nodes; and
if a comparison result is consistent, determining that the consensus is reached, and determining a specific consensus blockchain node based on the consensus negotiation information.

In a possible design, the method further includes:
receiving, by the second blockchain node, an archiving result fed back by the third-party storage server; and
sending, by the second blockchain node, the archiving result to the one or more other blockchain nodes.

A second aspect of the embodiments of this application discloses a block data archiving method. The method includes:
sending, by a client, an archiving request to a blockchain node in a blockchain;
receiving, by the client, feedback information of a consensus blockchain node, where the consensus blockchain node is a blockchain node determined through a consensus between third blockchain nodes that receive the archiving request, and the third blockchain node is a blockchain node with a resource of a block stored in the third blockchain node meeting a block data archiving condition; and
uploading, by the client based on the feedback information, to-be-archived block data in the consensus blockchain node to a third-party storage server for archiving.

In a possible design, the sending, by a client, an archiving request to a blockchain node in a blockchain includes:
monitoring, by the client, whether a resource of a block stored in the blockchain node in the blockchain meets the block data archiving condition; and
determining, by the client, a third blockchain node that meets the block data archiving condition, and sending an archiving request to the third blockchain node; or
sending, by the client, an archiving request to any blockchain node in a blockchain, where a blockchain node that receives the archiving request determines whether a resource of a block stored in the blockchain node meets the block data archiving condition, and acts as the third blockchain node if the block data archiving condition is met.

In a possible design, the uploading, by the client based on the feedback information, to-be-archived block data in the consensus blockchain node to a third-party storage server for archiving includes:
obtaining, by the client based on the feedback information, the to-be-archived block data in the consensus blockchain node, and uploading the to-be-archived block data to the third-party storage server for archiving; or
sending, by the client, a block uploading request to the consensus blockchain node based on the feedback information, where the consensus blockchain node uploads, based on the block uploading request, the to-be-archived block data to the third-party storage server for archiving.

In a possible design, the method further includes:
receiving, by the client, an archiving success result fed back by the third-party storage server, and generating an archiving transaction; and
sending, by the client, the archiving transaction to the third blockchain node, where the third blockchain node checks whether the archiving transaction is an archiving transaction of a blockchain node in a same group, and if the archiving transaction is the archiving transaction of the blockchain node in the same group, deletes block data corresponding to the archiving transaction; or checks whether the archiving transaction is an archiving transaction of another blockchain node in the blockchain, and if the archiving transaction is the archiving transaction of the one or more other blockchain nodes in the blockchain, deletes block data corresponding to the archiving transaction.

A third aspect of the embodiments of this application discloses a block data archiving method. The method includes:
sending, by a consensus negotiation node, feedback information to a client, where the consensus negotiation node is a blockchain node determined through consensus negotiation between third blockchain nodes that receive an archiving request sent by the client, and the third blockchain node is a blockchain node with a resource of a block stored in the third blockchain node meeting a block data archiving condition; and
uploading, by the consensus negotiation node based on a request of the client, to-be-archived block data to a third-party storage server for archiving.

In a possible design, the uploading, by the consensus negotiation node based on a request of the client, to-be-archived block data to a third-party storage server for archiving includes:
receiving, by the consensus negotiation node, an obtaining request sent by the client, and sending determined to-be-archived block data to the client, where the client uploads the to-be-archived block data to the third-party storage server for archiving; or
receiving, by the consensus negotiation node, a block uploading request sent by the client, and uploading determined to-be-archived block data to the third-party storage server for archiving.

A fourth aspect of the embodiments of this application discloses a first blockchain node, including:
an event center, configured to determine to-be-archived block data when detecting that a resource of a block stored in the first blockchain node meets a block data archiving condition;
a consensus unit, configured to send an archiving request to one or more other blockchain nodes, and negotiate a consensus with the one or more other blockchain nodes based on received consensus response information fed back by the one or more other blockchain nodes, where a block management unit is executed if it is determined that a consensus is reached and a consensus result that the first blockchain node is a consensus blockchain node is obtained, where the consensus result is used to determine that the first blockchain node or any other blockchain node is a consensus blockchain node; and
the block management unit, configured to send the to-be-archived block data to a third-party storage server for archiving.

In a possible design, the event center is configured to: monitor whether a quantity of blocks stored in the first blockchain node is greater than a preset block quantity; and if the quantity of blocks stored in the first blockchain node is greater than the preset block quantity, determine that the block data archiving condition is met, and obtain the to-be-archived block data; or
the event center is configured to: monitor whether a resource usage of the block stored in the first blockchain node is greater than a preset usage, where the block resource usage is an absolute value of disk space occupied by the stored block; and if the resource usage of the block stored in the first blockchain node is greater than the preset usage, determine that the block data archiving condition is met, and obtain the to-be-archived block data; or
the event center is configured to: monitor whether a resource usage rate of the block stored in the first blockchain node is greater than a preset usage rate, where the block resource usage rate is a relative value of disk space occupied by the stored block; and if the resource usage rate of the block stored in the first blockchain node is greater than the preset usage rate, determine that the block data archiving condition is met, and obtain the to-be-archived block data; or
the event center is configured to: monitor a creation time of the block stored in the first blockchain node, to determine whether there is a block whose creation time is greater than a preset time; and if there is a block whose creation time is greater than the preset time, determine that the block data archiving condition is met, and obtain data of the block whose block creation time is greater than the preset time.

In a possible design, the consensus unit that negotiates a consensus with the one or more other blockchain nodes based on the received consensus response information fed back by the one or more other blockchain nodes is configured to: obtain consensus negotiation information in the consensus response information, and compare the consensus negotiation information with consensus negotiation information of the first blockchain node; and if a comparison result is consistent, determine that a consensus is reached, and obtain a consensus result determined by a specific consensus blockchain node based on the consensus negotiation information, where the consensus negotiation information includes to-be-archived block data, whether to-be-archived block data is consistent, and a specific consensus blockchain node.

In a possible design, the first blockchain node further includes:
an archive management unit, configured to: receive an archiving result fed back by the third-party storage server, and send the archiving result to the one or more other blockchain nodes.

A fifth aspect of the embodiments of this application discloses a second blockchain node, including:
an event center, configured to: receive an archiving request sent by a first blockchain node, and determine to-be-archived block data when finding, based on the archiving request, that a resource of a block stored in the second blockchain node meets a block data archiving condition;
a consensus unit, configured to: feed back consensus response information to the first blockchain node, and negotiate a consensus with a blockchain node in a same group based on the consensus response information, where a block management unit is executed if it is determined that a consensus is reached, and a consensus result that the second blockchain node is a consensus blockchain node is obtained, where the consensus result is used to determine that the first blockchain node or any other blockchain node is a consensus blockchain node; and
the block management unit, configured to send the to-be-archived block data to a third-party storage server for archiving.

In a possible design, the event center is configured to: receive the archiving request sent by the first blockchain node, and query whether a quantity of blocks stored in the second blockchain node is greater than a preset block quantity; and if the quantity of blocks stored in the second blockchain node is greater than the preset block quantity, determine that the block data archiving condition is met, and obtain the to-be-archived block data; or
the event center is configured to: receive the archiving request sent by the first blockchain node, and query whether a resource usage of the block stored in the second blockchain node is greater than a preset usage, where the block resource usage is an absolute value of disk space occupied by the stored block; and if the resource usage of the block stored in the second blockchain node is greater than the preset usage, determine that the block data archiving condition is met, and obtain the to-be-archived block data; or
the event center is configured to: receive the archiving request sent by the first blockchain node, and query whether a resource usage rate of the block stored in the second blockchain node is greater than a preset usage rate, where the block resource usage rate is a relative value of disk space occupied by the stored block; and if the resource usage rate of the block stored in the second blockchain node is greater than the preset usage rate, determine that the block data archiving condition is met, and obtain the to-be-archived block data; or
the event center is configured to: receive the archiving request sent by the first blockchain node, and query a creation time of the block stored in the second blockchain node, to determine whether there is a block whose creation time is greater than a preset time; and if there is a block whose creation time is greater than the preset time, determine that the block data archiving condition is met, and obtain data of the block whose block creation time is greater than the preset time.

In a possible design, the second blockchain node further includes:
an archive management unit, configured to: receive an archiving result fed back by the third-party storage server, and send the archiving result to the one or more other blockchain nodes.

In a possible design, the consensus unit that feeds back the consensus response information to the first blockchain node and negotiates a consensus with the one or more other blockchain nodes based on the consensus response information is configured to: feed back the consensus response information to the first blockchain node, where the consensus response information includes consensus negotiation information, and the consensus negotiation information includes the to-be-archived block data, whether to-be-archived block data is consistent, and a specific consensus blockchain node; compare the consensus negotiation information with consensus negotiation information of the one or more other blockchain nodes; and if a comparison result is consistent, determine that a consensus is reached, and obtain a consensus result determined by a specific consensus blockchain node based on the consensus negotiation information.

A sixth aspect of the embodiments of this application discloses a client, including:
a sending unit, configured to send an archiving request to a blockchain node in a blockchain;
a receiving unit, configured to receive feedback information of a consensus blockchain node, where the consensus blockchain node is a blockchain node determined through a consensus between third blockchain nodes that receive the archiving request, and the third blockchain node is a blockchain node with a resource of a block stored in the third blockchain node meeting a block data archiving condition; and
a processing unit, configured to upload, based on the feedback information, to-be-archived block data in the consensus blockchain node to a third-party storage server for archiving.

A seventh aspect of the embodiments of this application discloses a consensus negotiation node. The consensus negotiation node is a blockchain node determined through consensus negotiation between third blockchain nodes that receive an archiving request sent by a client, the third blockchain node is a blockchain node with a resource of a block stored in the third blockchain node meeting a block data archiving condition, and the consensus negotiation node includes:
a transceiver unit, configured to send feedback information to the client, and receive a request of the client; and
a processing unit, configured to upload, based on the request of the client, to-be-archived block data to a third-party storage server for archiving.

An eighth aspect of the embodiments of this application discloses a blockchain system, including the first blockchain node disclosed in the fourth aspect of the embodiments of this application and the second blockchain node disclosed in the fifth aspect of the embodiments of this application.

A ninth aspect of the embodiments of this application discloses a blockchain system, including:
a client, configured to send an archiving request to a blockchain node in a blockchain; receive feedback information of a third blockchain node, where the third blockchain node is a blockchain node with a resource of a block stored in the third blockchain node meeting a block data archiving condition; and send a request to a blockchain node; and
the blockchain node, configured to: when a resource of a block stored in the blockchain node meets the block data archiving condition, and it is determined, through consensus negotiation with one or more other blockchain nodes that meets the block data archiving condition, that the blockchain node is a consensus negotiation node, send feedback information to the client, and upload, based on the request of the client, to-be-archived block data to a third-party storage server for archiving.

A tenth aspect of the embodiments of this application discloses a computer-readable storage medium, including an instruction. When the instruction runs on a computer, the computer is enabled to perform the block data archiving method disclosed in any one of the first aspect, the second aspect, the third aspect, and the fourth aspect of the embodiments of this application.

### BRIEF DESCRIPTION OF DRAWINGS

FIG. 1 is a schematic architectural diagram of a blockchain node in a blockchain system according to an embodiment of this application;
FIG. 2 is a schematic flowchart of a block data archiving method according to an embodiment of this application;
FIG. 3 is a schematic diagram of blockchain node grouping in a blockchain according to an embodiment of this application;
FIG. 4 is a schematic flowchart of reaching a consensus between blockchain nodes according to an embodiment of this application;
FIG. 5 is a schematic structural diagram of a blockchain node according to an embodiment of this application;
FIG. 6 is a schematic flowchart of a block data archiving method according to an embodiment of this application;
FIG. 7 is a schematic structural diagram of a blockchain node according to an embodiment of this application;
FIG. 8 is a schematic structural diagram of a client according to an embodiment of this application; and
FIG. 9 is a schematic structural diagram of a consensus negotiation node according to an embodiment of this application.

### DETAILED DESCRIPTION

The following describes technical solutions in embodiments of this application with reference to accompanying drawings in the embodiments of this application. In the description of this application, unless otherwise stated, "/" represents a meaning of or, for example, A/B may represent A or B; "and/or" in this specification is merely an association relationship for describing associated objects and represents that three relationships may exist, for example, A and/or B may represent the following three cases: Only A exists, both A and B exist, and only B exists. In addition, in the description of this application, unless otherwise stated, "a plurality of" means two or more than two. In addition, for facilitate clear description of the technical solutions in the embodiments of this application, words such as "first" and "second" are used to distinguish between same items or similar items that have basically same functions and effects. A person skilled in the art may understand that the words such as "first" and "second" do not limit a quantity and an execution order, and the words such as "first" and "second" do not imply that the items are definitely different.

In addition, the terms "including" and "having" in the embodiments of this application, the claims, and the accompanying drawings are not exclusive. For example, a process, a method, a system, a product, or a device that includes a series of steps or modules is not limited to the listed steps or modules, and may further include steps or modules that are not listed.

Ablockchain is a new application mode of computer technologies such as distributed data storage, point-to-point transmission, a consensus mechanism, and an encryption algorithm. As an important concept of bitcoin, the blockchain is essentially a decentralized database.

In addition, as an underlying technology of bitcoin, the blockchain is a cryptographically guaranteed untamperable and unforgeable distributed ledger. The blockchain specifically includes a plurality of independent blockchain nodes. Each blockchain node has an independent ledger stored, which is managed and maintained by the blockchain node. Specifically, each blockchain node is configured to verify validity of information of the blockchain node and generate a next block. The block is a data storage structure and is an object processed by a blockchain system.

During running of the blockchain system, a blockchain node periodically packages a recently received transaction into a block, and broadcasts the block to all blockchain nodes in the blockchain system, and the blockchain nodes that receive the block store the transaction in the block and the block into local ledges. It should be noted that, each generated block needs a consensus between participating blockchain nodes. In other words, there is a consensus mechanism between the blockchain nodes.

The consensus mechanism is a mathematical algorithm for building trust and gaining rights and interests between different blockchain nodes in the blockchain system.

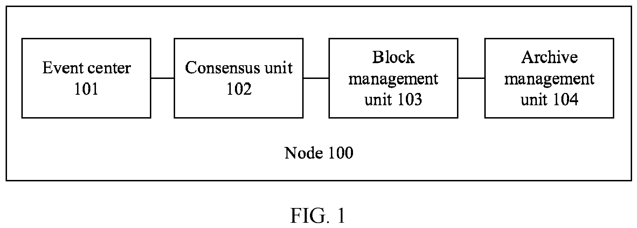

As shown in FIG. 1, in a blockchain system in an embodiment of this application, each blockchain node 100 internally includes an event center 101, a consensus unit 102, a block management module 103, and an archive management module 104.

The event center 101 is configured to monitor a process and a status of the local blockchain node in which the event center is located, and receive and process an archiving request from one or more other blockchain nodes.

When detecting that the local blockchain node meets a block data archiving condition, the event center 101 notifies the consensus unit 102 of the local blockchain node that block data can be archived currently, and sends information such as block data that needs to be archived. The consensus unit 102 sends an archiving request to one or more other blockchain nodes.

When receiving a request from the local blockchain node for querying whether the local blockchain node meets the block data archiving condition, the event center 101 determines whether block data needs to be archived in a current status of the local blockchain node, and returns a result to the consensus unit 102 of the local blockchain node.

The consensus unit 102 is configured to negotiate about whether to archive block data between a plurality of blockchain nodes, to facilitate a consensus on archiving between the blockchain nodes.

When the consensus unit 102 receives a notification from the event center 101 of the local blockchain node, indicating that the local blockchain node meets the block data archiving condition and block data can be archived, the consensus unit 102 sends an archiving request to one or more other blockchain nodes.

When receiving an archiving request sent by one or more other blockchain nodes, the consensus unit 102 of the local blockchain node sends an inquiry request to the event center 101 of the local blockchain node, to inquire about whether the local blockchain node requires archiving, and uses a result that is fed back by the event center 101 by detecting a process and a status of the local blockchain node and that is of whether archiving is to be performed, as a response to the archiving request sent by the one or more other blockchain nodes.

The block management module 103 is configured to manage and maintain block information, a storage status, and the like of a block of the local blockchain node and an archived and uploaded block.

When the local blockchain node generates a new block, the block management module 103 records basic information of the block, for example, basic information such as digest information, a creation time, a block size, a storage mode, and a storage location of the block. When the local blockchain node has a block uploaded or when a storage state of a block changes, the block management module 103 correspondingly modifies block information that needs to be maintained on the local blockchain node.

The archive management module 104 is configured to manage and maintain an archiving policy of the local blockchain node. The archiving policy is preconfigured in the archive management module 104. Further, the archive management module 104 also supports a customized archiving policy submitted by a technician or a user.

Based on the architecture of the blockchain node in the blockchain system disclosed in the foregoing embodiment of this application, a block data archiving solution disclosed in the embodiments of this application is described by using a blockchain system including N blockchain nodes as an example. A value of N is a positive integer greater than 2.

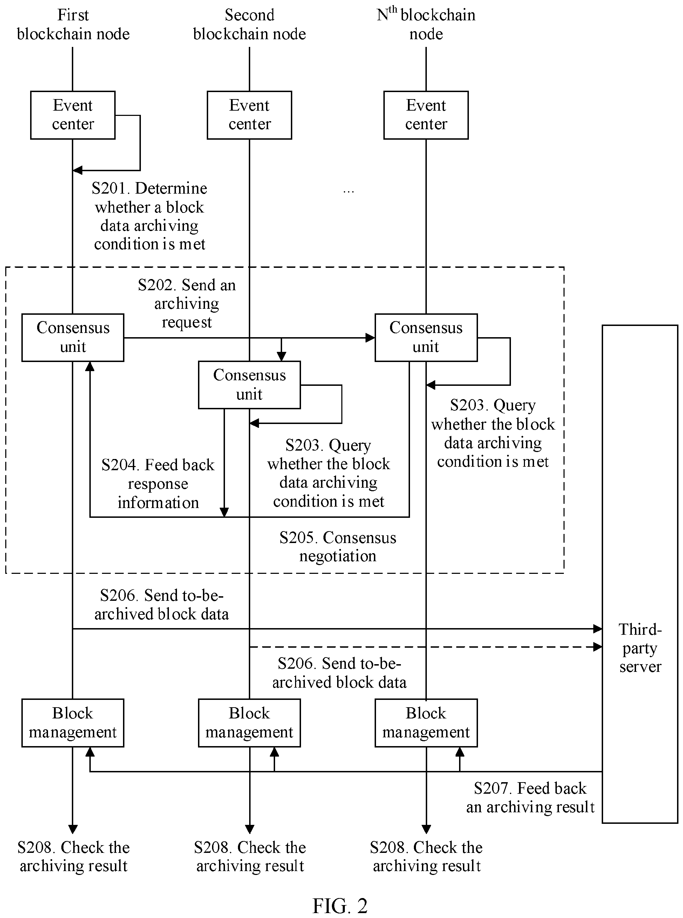

FIG. 2 is a schematic flowchart of a block data archiving method according to an embodiment of this application. The method mainly includes the following steps.

S201. A first blockchain node monitors whether a resource of a block stored in the first blockchain node meets a block data archiving condition. If yes, determine to-be-archived block data, and perform step S202. If no, skip archiving.

In S201, a specific architecture of the first blockchain node is the same as that of the blockchain node disclosed in FIG. 1.

An event center of the first blockchain node monitors a process and a status of the first blockchain node. When the event center of the first blockchain node detects that the first blockchain node meets the archiving condition, the event center notifies a consensus unit of the first blockchain node of information such as block data that needs to be archived, and the consensus unit initiates an archiving request.

In specific implementation, the block data archiving condition includes the following four conditions:
1. A blockchain node detects that a quantity of blocks stored in the blockchain node is greater than a preset block quantity, and determines that the block data archiving condition is met.
2. A blockchain node detects that a resource usage of a block stored in the blockchain node is greater than a preset usage, and determines that the block data archiving condition is met, where the block resource usage is an absolute value of disk space occupied by the stored block.
3. A blockchain node detects that a resource usage rate of a block stored in the blockchain node is greater than a preset usage rate, and determines that the block data archiving condition is met, where the block resource usage rate is a relative value of disk space occupied by the stored block.
4. A blockchain node monitors a creation time of a block stored in the blockchain node, determines that there is a block whose creation time is greater than a preset time, and determines that the block data archiving condition is met.

It should be noted that the four block data archiving conditions are only some of all block data archiving conditions. The block data archiving condition can be customized by a user, or customized by a technician based on a specific situation.

In a process of performing S201, if the event center of the first blockchain node detects that the resource of the block stored in the first blockchain node does not meet the block data archiving condition, the first blockchain node does not perform archiving, and archiving fails.

S202. The first blockchain node sends an archiving request to one or more other blockchain nodes.

In S202, the consensus unit of the first blockchain node receives a notification sent by the event center, indicating that the first blockchain node meets the block data archiving condition. Preferably, the consensus unit of the first blockchain node may send an archiving request to one or more other blockchain nodes in a same group. Alternatively, the consensus unit of the first blockchain node may send an archiving request to one or more other blockchain nodes located in a blockchain.

It should be noted that the archiving request may be actively initiated by the blockchain node, or may be triggered by the event center of the blockchain node after a specific event is detected, to avoid resource overheads caused by periodic detection.

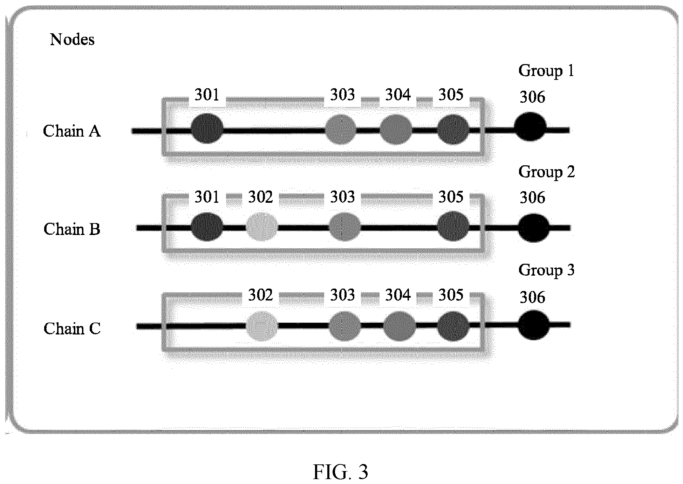

It should be further noted that when the first blockchain node meets the block data archiving condition, the first blockchain node sends the archiving request to one or more other blockchain nodes in a same group. FIG. 3 is a schematic diagram of blockchain node grouping in a blockchain system according to an embodiment of this application, and is used to describe a group relationship between blockchain nodes.

As shown in FIG. 3, a blockchain node 301, a blockchain node 302, a blockchain node 303, a blockchain node 304, a blockchain node 305, and a blockchain node 306 respectively belong to three different chains (Chain) A, B, and C.

During grouping, the blockchain node 301, the blockchain node 303, the blockchain node 304, and the blockchain node 305 on Chain A are grouped into a group (Group 1).

The blockchain node 301, the blockchain node 302, the blockchain node 303, and the blockchain node 305 on Chain B are grouped into a group (Group 2).

The blockchain node 302, the blockchain node 303, the blockchain node 304, and the blockchain node 305 on Chain C are grouped into a group (Group 3).

It can be learned from FIG. 3 that blockchain nodes may belong to a same chain, or may belong to different chains. When blockchain nodes are grouped, the blockchain nodes need to be grouped based on chains on which the blockchain nodes are located.

It should be noted that the blockchain node may autonomously select a group to which the blockchain node is to be added.

Based on the grouping, when the first blockchain node meets the block data archiving condition, the first blockchain node may alternatively send the archiving request to one or more other blockchain nodes in another group.

S203. The one or more other blockchain nodes receives the archiving request sent by the first blockchain node, and queries whether a resource of a block stored in the one or more other blockchain nodes meets the block data archiving condition. If yes, perform step S204. If no, skip archiving.

In a process of performing S203, based on the received archiving request sent by the consensus unit of the first blockchain node, a consensus unit of the one or more other blockchain nodes inquiries of an event center of the one or more other blockchain nodes about whether the block data archiving condition is met.

In specific implementation, the block data archiving condition includes, but is not limited to, the four conditions disclosed above.

S204. The one or more other blockchain nodes that meet the block data archiving condition generates consensus response information, and feeds back the consensus response information to the first blockchain node.

In a process of performing S203 and S204, a processing process after the one or more other blockchain nodes receives the archiving request sent by the first blockchain node is described in detail by using a processing process of a second blockchain node shown in FIG. 2. The second blockchain node and the first blockchain node may or may not be in a same group.

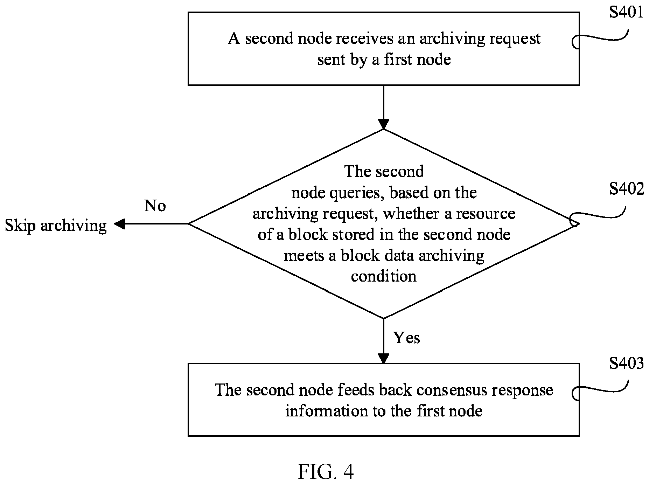

FIG. 4 is a flowchart of processing an archiving request by a second blockchain node according to an embodiment of this application. The process includes the following steps:
S401. The second blockchain node receives the archiving request sent by the first blockchain node.

A specific architecture of the second blockchain node is the same as that of the blockchain node disclosed in FIG. 1. In S401, an event center of the second blockchain node receives the archiving request sent by the consensus unit of the first blockchain node.

S402. The second blockchain node queries, based on the archiving request, whether a resource of a block stored in the second blockchain node meets the block data archiving condition. If yes, perform S403. If no, skip archiving, that is, do not respond to the archiving request sent by the first blockchain node.

In S402, the event center of the second blockchain node queries, based on the received archiving request, which may also be considered as detected, whether the resource of the block stored in the second blockchain node meets the block data archiving condition. When the second blockchain node meets the block data archiving condition, the event center notifies a consensus unit of the second blockchain node of information such as block data that needs to be archived.

S403. The second blockchain node feeds back consensus response information to the first blockchain node.

In S403, the consensus unit of the second blockchain node receives a notification that is sent by the event center of the second blockchain node and that includes information such as block data to be archived, generates a consensus response information based on the notification, and feeds back the consensus response information to the consensus unit of the first blockchain node.

S205. The first blockchain node negotiates a consensus with the one or more other blockchain nodes based on the received consensus response information fed back by the one or more other blockchain nodes. If a consensus is reached, determine a consensus blockchain node, and perform step S206. If no consensus is reached, skip archiving.

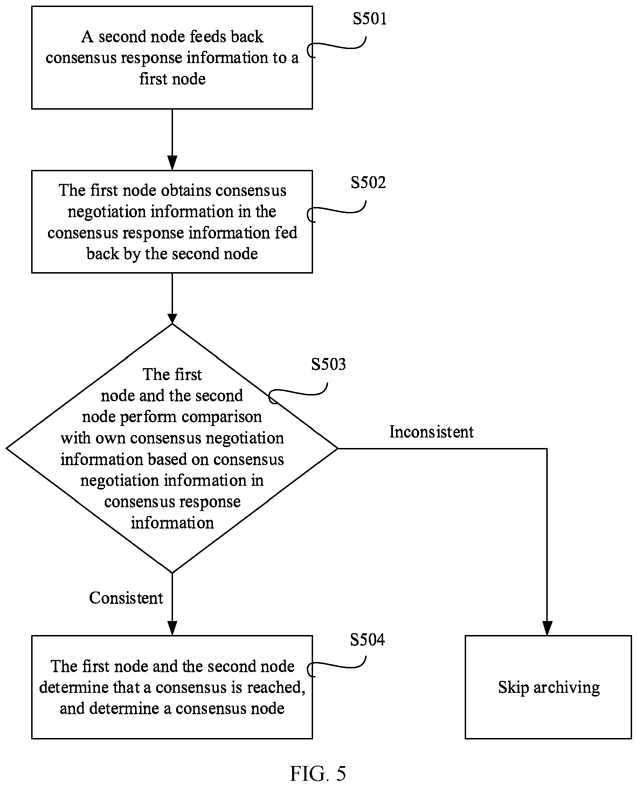

In specific implementation, a process in which the first blockchain node negotiates a consensus with the one or more other blockchain nodes is still described by using a process in which the first blockchain node negotiates a consensus with the second blockchain node. As shown in FIG. 5, the process mainly includes the following steps:
S501. The second blockchain node feeds back the consensus response information to the first blockchain node.

In S501, the consensus response information fed back by the second blockchain node to the first blockchain node includes consensus negotiation information. The consensus negotiation information includes to-be-archived block data, information about whether to-be-archived block data is consistent, and a specific consensus blockchain node.

In other words, content included in the consensus negotiation information is content that needs to be negotiated between the blockchain nodes.

It should be noted that the consensus negotiation information includes, but is not limited to, the content that needs to be negotiated.

S502. The first blockchain node obtains consensus negotiation information in the consensus response information fed back by the second blockchain node.

S503. The first blockchain node and the second blockchain node perform comparison with own consensus negotiation information based on consensus negotiation information in consensus response information. If a comparison result is consistent, perform S504. If the comparison result is inconsistent, no consensus is reached and no archiving is performed.

In S503, based on the content that requires consensus negotiation between the blockchain nodes in S501, the first blockchain node and the second blockchain node negotiate about which blocks are to be archived, whether block data that is on the first blockchain node and the second blockchain node and that needs to be archived is consistent, and which blockchain node is to archive the blocks, that is, act as a consensus blockchain node.

S504. The first blockchain node and the second blockchain node determine that a consensus is reached, and determine a consensus blockchain node.

In specific implementation, the first blockchain node or the second blockchain node may be determined as a consensus blockchain node through negotiation.

It should be noted that the consensus blockchain node is not limited to the first blockchain node or the second blockchain node, and may alternatively be an N^{th} blockchain node shown in FIG. 2 or one or more other blockchain nodes in a same group, where a value of N is a positive integer.

S206. A consensus blockchain node sends to-be-archived block data to a third-party storage server for archiving.

Based on the consensus, it can be determined that the blockchain nodes have agreed on the to-be-archived data to be uploaded. A party acting as a consensus blockchain node may package the data determined through the consensus and upload the data to a third-party storage server. The third-party storage server may be specifically a distributed storage system.

In specific implementation, when the consensus blockchain node is the first blockchain node, as shown by a solid line in FIG. 2, the first blockchain node sends the to-be-archived block data to the third-party storage server for archiving.

When the consensus blockchain node is the second blockchain node, as shown by a dashed line in FIG. 2, the second blockchain node sends the to-be-archived block data to the third-party storage server for archiving.

It should be noted that the consensus blockchain node is not limited to the first blockchain node or the second blockchain node, and may be the N^{th} blockchain node shown in FIG. 2 or one or more other blockchain nodes in a same group.

S207. The third-party server or the consensus blockchain node returns an archiving result to each blockchain node.

In specific implementation, when the consensus blockchain node is the first blockchain node, the first blockchain node receives the archiving result fed back by the third-party server, and the first blockchain node or the third-party server sends the archiving result to each other blockchain node.

When the consensus blockchain node is the second blockchain node, the second blockchain node receives the archiving result fed back by the third-party server, and the second blockchain node or the third-party server sends the archiving result to each other blockchain node.

It should be noted that the consensus blockchain node is not limited to the first blockchain node or the second blockchain node, and may be a third blockchain node, a fourth blockchain node, or one or more other blockchain nodes in a same group in FIG. 2.

S208. Each blockchain node verifies the archiving result, and determines whether the archived block data is block data subject to a consensus between all the blockchain nodes. If yes, complete archiving. If no, return to step S201.

In specific implementation, each blockchain node checks, based on the archiving result, whether the archived block data is the block data subject to the archiving consensus in the foregoing steps, and checks whether data content of the archived block data is correct.

If the archived block data is the block data subject to the archiving consensus in the foregoing steps and the data content is correct, each blockchain node completes archiving.

According to the block data archiving method disclosed in this embodiment of this application, blockchain nodes in a blockchain system are grouped based on chains on which the blockchain nodes are located, so that blockchain nodes in a same group share archived data between the blockchain nodes through a consensus, thereby avoiding redundant backup, and ensuring correctness of the archived data. An event-triggered archiving condition determining mechanism is used and an archiving condition can be customized by a user, thereby effectively improving implementation efficiency, operability, and flexibility of archiving.

In the block data archiving method disclosed in the foregoing embodiment of this application, the first blockchain node is a party initiating an archiving request. In practice, the second blockchain node may also act as a party initiating an archiving request.

Based on the block data archiving method disclosed in the foregoing embodiment of this application, a process of determining to-be-archived block data when the first blockchain node or one or more other blockchain nodes detects that a resource of a block stored in the first blockchain node or the one or more other blockchain nodes meets the block data archiving condition varies with the block data archiving condition.

Optionally, the first blockchain node or the one or more other blockchain nodes monitors whether a quantity of blocks stored in the first blockchain node or the one or more other blockchain nodes is greater than a preset block quantity; and if the quantity of blocks stored in the blockchain node is greater than the preset block quantity, determines that the block data archiving condition is met, and obtains to-be-archived block data.

Optionally, the first blockchain node or the one or more other blockchain nodes monitors whether a resource usage of the block stored in the first blockchain node or the one or more other blockchain nodes is greater than a preset usage, where the block resource usage is an absolute value of disk space occupied by the stored block; and if the resource usage of the block stored in the blockchain node is greater than the preset usage, determines that the block data archiving condition is met, and obtains to-be-archived block data.

Optionally, the first blockchain node or the one or more other blockchain nodes monitors whether a resource usage rate of the block stored in the first blockchain node or the one or more other blockchain nodes is greater than a preset usage rate, where the block resource usage rate is a relative value of disk space occupied by the stored block; and if the resource usage rate of the block stored in the blockchain node is greater than the preset usage rate, determines that the block data archiving condition is met, and obtains to-be-archived block data.

Optionally, the first blockchain node or the one or more other blockchain nodes monitors a creation time of the block stored in the first blockchain node or the one or more other blockchain nodes, to determine whether there is a block whose creation time is greater than a preset time; and if there is a block whose creation time is greater than the preset time, determines that the block data archiving condition is met, and obtains data of the block whose block creation time is greater than the preset time.

According to the block data archiving method and the related device that are disclosed in the embodiments of this application, any blockchain node determines to-be-archived block data when detecting that a resource of a block stored in the any blockchain node meets a block data archiving condition, sends an archiving request to a blockchain node in a same group, receives consensus response information fed back by the blockchain node in the same group, and negotiates a consensus with the blockchain node in the same group based on the consensus response information. A current blockchain node sends to-be-archived block data to a third-party storage server for archiving if it is determined that a consensus is reached and a consensus result that the current blockchain node is a consensus blockchain node is obtained. The consensus result is used to determine that the current blockchain node or any blockchain node in the same group is a consensus blockchain node. In the foregoing process, a same piece of archived data is shared between a plurality of blockchain nodes, thereby avoiding redundant backup, and effectively improving implementation efficiency, operability, and flexibility of data archiving.

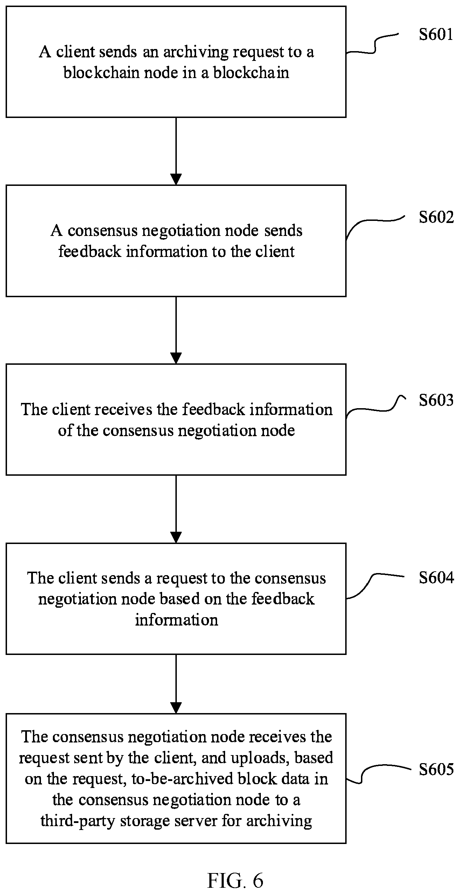

As shown in FIG. 6, an embodiment of this application further discloses a flowchart of a block data archiving method. The block data archiving method includes the following steps.

S601. A client sends an archiving request to a blockchain node in a blockchain.

In specific implementation, optionally, the client may monitor a process and a status of a blockchain node in a blockchain. To be specific, the client monitors whether a resource of a block stored in a blockchain node in a blockchain meets a block data archiving condition, determines a third blockchain node that meets the block data archiving condition, and sends an archiving request to the third blockchain node. The third blockchain node receives the archiving request, negotiates a consensus with another third blockchain node that receives the archiving request, and determines a consensus negotiation node.

Optionally, the client may alternatively send an archiving request to any blockchain node in a blockchain, and the any blockchain node that receives the archiving request determines whether a resource of a block stored in the any blockchain node meets a block data archiving condition, and if the block data archiving condition is met, acts as a third blockchain node, negotiates a consensus with another third blockchain node that meets the block data archiving condition, and determines a consensus negotiation node.

S602. A consensus negotiation node sends feedback information to the client.

In specific implementation, the consensus negotiation node is a blockchain node determined through consensus negotiation between third blockchain nodes that receive the archiving request. The third blockchain node is a blockchain node with a resource of a block stored in the third blockchain node meeting a block data archiving condition. In other words, the feedback information is response information of the blockchain node in the blockchain to the archiving request of the client.

The block data archiving condition in this embodiment of this application is the same as the block data archiving condition disclosed in the foregoing embodiment of this application. Details are not described herein again.
S603. The client receives the feedback information of the consensus negotiation node.
S604. The client sends a request to the consensus negotiation node based on the feedback information.
S605. The consensus negotiation node receives the request sent by the client, and uploads, based on the request, to-be-archived block data in the consensus negotiation node to a third-party storage server for archiving.

In specific implementation, S604 and S605 are specifically performed in the following manners based on different requests sent by the client:

### First manner:

First, the client sends an obtaining request to the consensus negotiation node based on the feedback information.

Then, the consensus negotiation node sends determined to-be-archived block data to the client based on the obtaining request.

Finally, the client obtains the to-be-archived block data in the consensus negotiation node, and uploads the to-be-archived block data to the third-party storage server for archiving.

### Second manner:

First, the client sends a block uploading request to the consensus negotiation node based on the feedback information.

Then, the consensus negotiation node uploads, based on the block uploading request, determined to-be-archived block data to the third-party storage server for archiving.

Preferably, after the data archiving succeeds, the client receives an archiving success result fed back by the third-party storage server, generates an archiving transaction, and sends the archiving transaction to the third blockchain node.

Optionally, after receiving the archiving transaction sent by the client, the third blockchain node checks whether the archiving transaction is an archiving transaction of a blockchain node in a same group, and if yes, deletes block data corresponding to the archiving transaction, or if no, does not perform a deletion operation.

Optionally, after receiving the archiving transaction sent by the client, the third blockchain node checks whether the archiving transaction is an archiving transaction of another blockchain node in the blockchain, and if yes, deletes block data corresponding to the archiving transaction, or if no, does not perform a deletion operation.

According to the block data archiving method disclosed in this embodiment of this application, the client sends the archiving request to the blockchain node, so that the to-be-archived block data in the consensus negotiation node that is in the blockchain, that meets the block data archiving condition, and that is determined through consensus negotiation can be uploaded to the third-party storage server for archiving. In this way, a same piece of archived data is shared between a plurality of blockchain nodes, thereby avoiding redundant backup, and effectively improving implementation efficiency, operability, and flexibility of data archiving.

Based on the block data archiving method disclosed in the embodiments of this application, correspondingly, the embodiments of this application further correspondingly disclose a schematic structural diagram of a blockchain node that specifically performs the block data archiving method.

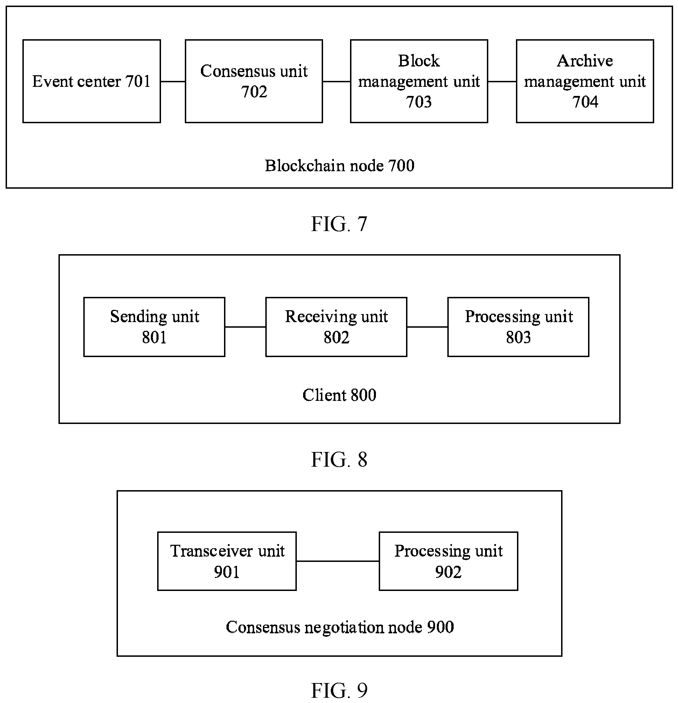

FIG. 7 is a schematic structural diagram of a blockchain node according to an embodiment of this application. The blockchain node includes the event center, the consensus unit, the block management module, and the archive management module in FIG. 1. A structure of the blockchain node is the same as those of the first blockchain node, the second blockchain node, and the one or more other blockchain nodes that are mentioned in the block data archiving method shown in FIG. 2 in the foregoing embodiment of this application. The structure of the blockchain node 700 includes: an event center 701, a consensus unit 702, and a block management unit 703.

For the event unit 701, when the blockchain node sends an archiving request, the event unit 701 is configured to determine to-be-archived block data when detecting that a resource of a block stored in the blockchain node meets a block data archiving condition.

When the blockchain node receives an archiving request, the event unit 701 is configured to: receive an archiving request sent by one or more other blockchain nodes, and determine to-be-archived block data when finding, based on the archiving request, that a resource of a block stored in the blockchain node meets a block data archiving condition.

For the consensus unit 702, when the blockchain node sends an archiving request, the consensus unit 702 is configured to: send an archiving request to one or more other blockchain nodes, and negotiate a consensus with the one or more other blockchain nodes based on received consensus response information fed back by the one or more other blockchain nodes, where the block management unit 703 is executed if it is determined that a consensus is reached and a consensus result that the blockchain node is a consensus blockchain node is obtained, where the consensus result is used to determine that the blockchain node or any other blockchain node in a same group is a consensus blockchain node.

When the blockchain node receives an archiving request, the consensus unit 702 is configured to: feed back consensus response information to one or more other blockchain nodes, and negotiate a consensus with the one or more other blockchain nodes in a same group based on the consensus response information, where the block management unit 703 is executed if it is determined that a consensus is reached, and a consensus result that the blockchain node is a consensus blockchain node is obtained, where the consensus result is used to determine that the blockchain node or any one of the one or more other blockchain nodes is a consensus blockchain node.

The block management unit 703 is configured to send the to-be-archived block data to a third-party storage server for archiving.

For the archive management unit 704, when the blockchain node is a consensus blockchain node, the archive management unit 704 is configured to: receive an archiving result fed back by the third-party storage server, and send the archiving result to the one or more other blockchain nodes. When the blockchain node is not a consensus blockchain node, the archive management unit 704 is configured to: receive an archiving result fed back by the third-party storage server or the consensus blockchain node.

Optionally, when the blockchain node sends an archiving request, the event center 701 is configured to monitor whether a quantity of blocks stored in the blockchain node is greater than a preset block quantity; and if the quantity of blocks stored in the blockchain node is greater than the preset block quantity, determine that the block data archiving condition is met, and obtain the to-be-archived block data. When the blockchain node receives an archiving request, the event center 701 is configured to: receive an archiving request sent by one or more other blockchain nodes, query whether a quantity of blocks stored in the blockchain node is greater than a preset block quantity; and if the quantity of blocks stored in the blockchain node is greater than the preset block quantity, determine that the block data archiving condition is met, and obtain the to-be-archived block data.

Optionally, when the blockchain node sends an archiving request, the event center 701 is configured to: monitor whether a resource usage of the block stored in the blockchain node is greater than a preset usage, where the block resource usage is an absolute value of disk space occupied by the stored block; and if the resource usage of the block stored in the blockchain node is greater than the preset usage, determine that the block data archiving condition is met, and obtain the to-be-archived block data.

When the blockchain node receives an archiving request, the event center 701 is configured to: receive an archiving request sent by one or more other blockchain nodes, query whether a resource usage of the block stored in the blockchain node is greater than a preset usage, where the block resource usage is an absolute value of disk space occupied by the stored block; and if the resource usage of the block stored in the blockchain node is greater than the preset usage, determine that the block data archiving condition is met, and obtain the to-be-archived block data.

Optionally, when the blockchain node sends an archiving request, the event center 701 is configured to: monitor whether a resource usage rate of the block stored in the blockchain node is greater than a preset usage rate, where the block resource usage rate is a relative value of disk space occupied by the stored block; and if the resource usage rate of the block stored in the blockchain node is greater than the preset usage rate, determine that the block data archiving condition is met, and obtain the to-be-archived block data.

When the blockchain node receives an archiving request, the event center 701 is configured to: receive an archiving request sent by one or more other blockchain nodes, query whether a resource usage rate of the block stored in the blockchain node is greater than a preset usage rate, where the block resource usage rate is a relative value of disk space occupied by the stored block; and if the resource usage rate of the block stored in the blockchain node is greater than the preset usage rate, determine that the block data archiving condition is met, and obtain the to-be-archived block data.

Optionally, when the blockchain node sends an archiving request, the event center 701 is configured to: monitor a creation time of the block stored in the blockchain node, to determine whether there is a block whose creation time is greater than a preset time; and if there is a block whose creation time is greater than the preset time, determine that the block data archiving condition is met, and obtain data of the block whose block creation time is greater than the preset time.

When the blockchain node receives an archiving request, the event center 701 is configured to: receive an archiving request sent by one or more other blockchain nodes, query a creation time of the block stored in the blockchain node, to determine whether there is a block whose creation time is greater than a preset time; and if there is a block whose creation time is greater than the preset time, determine that the block data archiving condition is met, and obtain data of the block whose block creation time is greater than the preset time.

Optionally, when the blockchain node sends an archiving request, the consensus unit 702 that negotiates a consensus with the one or more other blockchain nodes based on the received consensus response information fed back by the one or more other blockchain nodes is configured to: obtain consensus negotiation information in the consensus response information, and compare the consensus negotiation information with consensus negotiation information of the blockchain node; and if a comparison result is consistent, determine that a consensus is reached, and obtain a consensus result determined by a specific consensus blockchain node based on the consensus negotiation information, where the consensus negotiation information includes to-be-archived block data, information about whether to-be-archived block data is consistent, and a specific consensus blockchain node.

When the blockchain node receives an archiving request, the consensus unit 702 that feeds back the consensus response information to the one or more other blockchain nodes in the same group, and negotiates a consensus with the one or more other blockchain nodes based on the consensus response information is configured to: feed back the consensus response information to the one or more other blockchain nodes in the same group, where the consensus response information includes consensus negotiation information, and the consensus negotiation information includes to-be-archived block data, information about whether to-be-archived block data is consistent, and a specific consensus blockchain node; compare the consensus negotiation information with consensus negotiation information of the other blockchain node; and if a comparison result is consistent, determine that a consensus is reached, and obtain a consensus result determined by a specific consensus blockchain node based on the consensus negotiation information.

The blockchain node disclosed in this embodiment of this application determines to-be-archived block data when detecting that a resource of a block stored in the blockchain node meets a block data archiving condition, sends an archiving request to one or more other blockchain nodes, receives consensus response information fed back by the one or more other blockchain nodes, and negotiates a consensus with the one or more other blockchain nodes based on the consensus response information. A current blockchain node sends to-be-archived block data to a third-party storage server for archiving if it is determined that a consensus is reached and a consensus result that the current blockchain node is a consensus blockchain node is obtained. The consensus result is used to determine that the current blockchain node or any one of the one or more other blockchain nodes is a consensus blockchain node. In this way, a same piece of archived data is shared between a plurality of blockchain nodes, thereby avoiding redundant backup, and effectively improving implementation efficiency, operability, and flexibility of data archiving.

An embodiment of this application provides a blockchain system, including the blockchain node disclosed in FIG. 7 in this application.

Based on the block data archiving method disclosed in the foregoing embodiment of this application in FIG. 6, correspondingly, the embodiments of this application further correspondingly disclose schematic structural diagrams of a client and a blockchain node that specifically perform the block data archiving method.

FIG. 8 is a schematic structural diagram of a client according to an embodiment of this application. The client 800 includes:
a sending unit 801, configured to send an archiving request to a blockchain node in a blockchain;
a receiving unit 802, configured to receive feedback information of a consensus blockchain node, where
the consensus blockchain node is a blockchain node determined through a consensus between third blockchain nodes that receive the archiving request, and the third blockchain node is a blockchain node with a resource of a block stored in the third blockchain node meeting a block data archiving condition; and
a processing unit 803, configured to upload, based on the feedback information, to-be-archived block data in the consensus blockchain node to a third-party storage server for archiving.

Optionally, the processing unit 803 is further configured to: monitor whether a resource of a block stored in a blockchain node in a blockchain meets the block data archiving condition. After the third blockchain node that meets the block data archiving condition is determined, the sending unit 801 sends an archiving request to the third blockchain node.

Optionally, the sending unit 801 is configured to send an archiving request to any blockchain node in a blockchain.

Optionally, the receiving unit 802 is configured to obtain, based on the feedback information, the to-be-archived block data in the consensus blockchain node. Correspondingly, the sending unit 801 is configured to upload the to-be-archived block data to the third-party storage server for archiving.

Optionally, the sending unit 801 is configured to send a block uploading request to the consensus blockchain node based on the feedback information.

Optionally, the receiving unit 802 is configured to receive an archiving success result fed back by the third-party storage server.

The processing unit 803 is configured to generate an archiving transaction based on the archive success result.

The sending unit 801 is configured to send the archiving transaction to the third blockchain node, so that the third blockchain node checks whether the archiving transaction is an archiving transaction of a blockchain node in a same group, and if the archiving transaction is the archiving transaction of the blockchain node in the same group, deletes block data corresponding to the archiving transaction, or if the archiving transaction is not the archiving transaction of the blockchain node in the same group, skips deletion; or checks whether the archiving transaction is an archiving transaction of another blockchain node in the blockchain, and if the archiving transaction is the archiving transaction of the one or more other blockchain nodes in the blockchain, deletes block data corresponding to the archiving transaction, or if the archiving transaction is not the archiving transaction of the one or more other blockchain nodes in the blockchain, skips deletion.

FIG. 9 is a schematic structural diagram of a consensus negotiation node according to an embodiment of this application. The consensus negotiation node is a blockchain node determined through consensus negotiation between third blockchain nodes that receive an archiving request sent by a client, and the third blockchain node is a blockchain node with a resource of a block stored in the third blockchain node meeting a block data archiving condition. It should be noted that in specific implementation, all blockchain nodes in a blockchain have a same structure, and with respect to a consensus negotiation result, each blockchain node may be a consensus negotiation node. The consensus negotiation node 900 includes:
a transceiver unit 901, configured to send feedback information to the client, and receive a request of the client; and
a processing unit 902, configured to upload, based on the request of the client, to-be-archived block data to a third-party storage server for archiving.

Optionally, the transceiver unit 901 is configured to receive an obtaining request sent by the client, and send determined to-be-archived block data to the client, so that the client uploads the to-be-archived block data to the third-party storage server for archiving.

Optionally, the transceiver unit 901 is configured to receive a block uploading request sent by the client, and upload determined to-be-archived block data to the third-party storage server for archiving.

Optionally, the transceiver unit 901 is further configured to receive an archiving transaction sent by the client.

The processing unit 902 is configured to check whether the archiving transaction is an archiving transaction of a blockchain node in a same group, and if the archiving transaction is the archiving transaction of the blockchain node in the same group, delete block data corresponding to the archiving transaction, or if the archiving transaction is not the archiving transaction of the blockchain node in the same group, skip deletion; or check whether the archiving transaction is an archiving transaction of another blockchain node in the blockchain, and if the archiving transaction is the archiving transaction of the one or more other blockchain nodes in the blockchain, delete block data corresponding to the archiving transaction, or if the archiving transaction is not the archiving transaction of the one or more other blockchain nodes in the blockchain, skip deletion.

Corresponding to the client and the blockchain node, an embodiment of this application further provides a blockchain system, including the client disclosed in FIG. 8 in this application and a blockchain node having a same structure as the consensus negotiation node disclosed in FIG. 9.

The client is configured to send an archiving request to a blockchain node in a blockchain; receive feedback information of a third blockchain node, where the third blockchain node is a blockchain node with a resource of a block stored in the third blockchain node meeting a block data archiving condition; and send a request to a blockchain node.

The blockchain node is configured to: when a resource of a block stored in the blockchain node meets the block data archiving condition, and it is determined, through consensus negotiation with one or more other blockchain nodes that meets the block data archiving condition, that the blockchain node is a consensus negotiation node, send feedback information to the client, and upload, based on the request of the client, to-be-archived block data to a third-party storage server for archiving.

According to the client and the blockchain node for implementing the block data archiving method that are disclosed in the embodiments of this application, the client sends the archiving request to the blockchain node, so that the to-be-archived block data in the consensus negotiation node that is in the blockchain, that meets the block data archiving condition, and that is determined through consensus negotiation can be uploaded to the third-party storage server for archiving. In this way, a same piece of archived data is shared between a plurality of blockchain nodes, thereby avoiding redundant backup, and effectively improving implementation efficiency, operability, and flexibility of data archiving.

In addition, an embodiment of this application provides a computer-readable storage medium, including an instruction for enabling a computer to run the block data archiving method disclosed in FIG. 2 in this application, or an instruction for enabling a computer to run the block data archiving method disclosed in FIG. 6 in this application.

In conclusion, according to the data archiving method and the related device that are disclosed in the embodiments of this application, any blockchain node determines to-be-archived block data when detecting that a resource of a block stored in the any blockchain node meets a block data archiving condition, sends an archiving request to one or more other blockchain nodes, receives consensus response information fed back by the one or more other blockchain nodes, and negotiates a consensus with the one or more other blockchain nodes based on the consensus response information. A current blockchain node sends to-be-archived block data to a third-party storage server for archiving if it is determined that a consensus is reached and a consensus result that the current blockchain node is a consensus blockchain node is obtained. The consensus result is used to determine that the current blockchain node or any one of the one or more other blockchain nodes is a consensus blockchain node. In the foregoing process, a same piece of archived data is shared between a plurality of blockchain nodes, thereby avoiding redundant backup, and effectively improving implementation efficiency, operability, and flexibility of data archiving.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, all or some of the procedure or functions according to the embodiments of this application are performed. The computer may be a general-purpose computer, a special-purpose computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

Finally, it should be noted that the foregoing embodiments are merely intended for describing examples of the technical solutions of this application rather than limiting this application. Although this application and beneficial effects of this application are described in detail with reference to the foregoing embodiments, persons of ordinary skill in the art should understand that they may still make modifications to the technical solutions described in the foregoing embodiments or make equivalent replacements to some technical features thereof, provided that such modifications or replacements do not cause the essence of corresponding technical solutions to depart from the scope of the claims of this application.

## Claims

1. A block data archiving method, wherein the method comprises:
determining, by a first blockchain node, to-be-archived block data when detecting that a resource of a block stored in the first blockchain node meets a block data archiving condition;
sending, by the first blockchain node, an archiving request to one or more other blockchain nodes;
negotiating, by the first blockchain node, a consensus with the one or more other blockchain nodes based on received consensus response information fed back by the one or more other blockchain nodes; and
sending, by the first blockchain node, the to-be-archived block data to a third-party storage server for archiving if it is determined that a consensus is reached and a consensus result that the first blockchain node is a consensus blockchain node is obtained, wherein the consensus result is used to determine that the first blockchain node or any one of the one or more other blockchain nodes is a consensus blockchain node.

2. The method according to claim 1, wherein the determining, by a first blockchain node, to-be-archived block data when detecting that a resource of a block stored in the first blockchain node meets a block data archiving condition comprises:
monitoring, by the first blockchain node, whether a quantity of blocks stored in the first blockchain node is greater than a preset block quantity; and
if the quantity of blocks stored in the first blockchain node is greater than the preset block quantity, determining that the block data archiving condition is met, and obtaining the to-be-archived block data; or
monitoring, by the first blockchain node, whether a resource usage of the block stored in the first blockchain node is greater than a preset usage, wherein the block resource usage is an absolute value of disk space occupied by the stored block; and
if the resource usage of the block stored in the first blockchain node is greater than the preset usage, determining that the block data archiving condition is met, and obtaining the to-be-archived block data; or
monitoring, by the first blockchain node, whether a resource usage rate of the block stored in the first blockchain node is greater than a preset usage rate, wherein the block resource usage rate is a relative value of disk space occupied by the stored block; and
if the resource usage rate of the block stored in the first blockchain node is greater than the preset usage rate, determining that the block data archiving condition is met, and obtaining the to-be-archived block data; or
monitoring, by the first blockchain node, a creation time of the block stored in the first blockchain node, to determine whether there is a block whose creation time is greater than a preset time; and
if there is the block whose creation time is greater than the preset time, determining that the block data archiving condition is met, and obtaining data of the block whose block creation time is greater than the preset time.

3. The method according to claim 1 or 2, wherein the sending, by the first blockchain node, an archiving request to one or more other blockchain nodes comprises:
sending, by the first blockchain node, the archiving request to a blockchain node in a same group, or sending, by the first blockchain node, the archiving request to a blockchain node in a same group and a blockchain node in another group in the blockchain.

4. The method according to claim 1 or 2, wherein the negotiating, by the first blockchain node, a consensus with the one or more blockchain nodes based on received consensus response information fed back by the one or more blockchain nodes comprises:
obtaining, by the first blockchain node, consensus negotiation information in the consensus response information, and comparing the consensus negotiation information with consensus negotiation information of the first blockchain node, wherein the consensus negotiation information comprises the to-be-archived block data, information about whether the to-be-archived block data is consistent, and a specific consensus blockchain node; and
if a comparison result is consistent, determining that the consensus is reached, and determining the specific consensus blockchain node based on the consensus negotiation information.

5. The method according to any one of claims 1 to 4, further comprising:
receiving, by the first blockchain node, an archiving result fed back by the third-party storage server; and
sending, by the first blockchain node, the archiving result to the one or more other blockchain nodes.

6. A block data archiving method, wherein the method comprises:
receiving, by a second blockchain node, an archiving request sent by a first blockchain node, wherein the second blockchain node and the first blockchain node are blockchain nodes in a same blockchain;
determining, by the second blockchain node, to-be-archived block data when finding, based on the archiving request, that a resource of a block stored in the second blockchain node meets a block data archiving condition;
feeding back, by the second blockchain node, consensus response information to the first blockchain node, and negotiating a consensus with one or more other blockchain nodes based on the consensus response information; and
sending, by the second blockchain node, the to-be-archived block data to a third-party storage server for archiving if it is determined that a consensus is reached, and a consensus result that the second blockchain node is a consensus blockchain node is obtained, wherein the consensus result is used to determine that the first blockchain node or any one of the one or more other blockchain nodes is a consensus blockchain node.

7. The method according to claim 6, wherein the determining to-be-archived block data when finding, based on the archiving request, that a resource of a block stored in the second blockchain node meets a block data archiving condition comprises:
after receiving the archiving request, querying, by the second blockchain node, whether a quantity of blocks stored in the second blockchain node is greater than a preset block quantity; and
if the quantity of blocks stored in the second blockchain node is greater than the preset block quantity, determining that the block data archiving condition is met, and obtaining the to-be-archived block data; or
after receiving the archiving request, querying, by the second blockchain node, whether a resource usage of the block stored in the second blockchain node is greater than a preset usage, wherein the block resource usage is an absolute value of disk space occupied by the stored block; and
if the resource usage of the block stored in the second blockchain node is greater than the preset usage, determining that the block data archiving condition is met, and obtaining the to-be-archived block data; or
after receiving the archiving request, querying, by the second blockchain node, whether a resource usage rate of the block stored in the second blockchain node is greater than a preset usage rate, wherein the block resource usage rate is a relative value of disk space occupied by the stored block; and
if the resource usage rate of the block stored in the second blockchain node is greater than the preset usage rate, determining that the block data archiving condition is met, and obtaining the to-be-archived block data; or
after receiving the archiving request, querying, by the second blockchain node, a creation time of the block stored in the second blockchain node, to determine whether there is a block whose creation time is greater than a preset time; and
if there is the block whose creation time is greater than the preset time, determining that the block data archiving condition is met, and obtaining data of the block whose block creation time is greater than the preset time.

8. The method according to claim 6 or 7, wherein the feeding back, by the second blockchain node, consensus response information to the first blockchain node, and negotiating a consensus with one or more other blockchain nodes based on the consensus response information comprises:
feeding back, by the second blockchain node, the consensus response information to the first blockchain node, wherein the consensus response information comprises consensus negotiation information, and the consensus negotiation information comprises the to-be-archived block data, information about whether the to-be-archived block data is consistent, and a specific consensus blockchain node;
comparing, by the second blockchain node, the consensus negotiation information with consensus negotiation information of the one or more other blockchain nodes; and
if a comparison result is consistent, determining that the consensus is reached, and determining the specific consensus blockchain node based on the consensus negotiation information.

9. The method according to any one of claims 6 to 8, further comprising:
receiving, by the second blockchain node, an archiving result fed back by the third-party storage server; and
sending, by the second blockchain node, the archiving result to the one or more other blockchain nodes.

10. A block data archiving method, wherein the method comprises:
sending, by a client, an archiving request to a blockchain node in a blockchain;
receiving, by the client, feedback information of a consensus blockchain node, wherein the consensus blockchain node is a blockchain node determined through a consensus between third blockchain nodes that receive the archiving request, and the third blockchain node is a blockchain node with a resource of a block stored in the third blockchain node meeting a block data archiving condition; and
uploading, by the client based on the feedback information, to-be-archived block data in the consensus blockchain node to a third-party storage server for archiving.

11. The method according to claim 10, wherein the sending, by a client, an archiving request to a blockchain node in a blockchain comprises:
monitoring, by the client, whether a resource of a block stored in the blockchain node in the blockchain meets the block data archiving condition; and
determining, by the client, a third blockchain node that meets the block data archiving condition, and sending the archiving request to the third blockchain node; or
sending, by the client, the archiving request to any blockchain node in the blockchain, wherein a blockchain node that receives the archiving request determines whether a resource of a block stored in the blockchain node meets the block data archiving condition, and acts as the third blockchain node if the block data archiving condition is met.

12. The method according to claim 10, wherein the uploading, by the client based on the feedback information, to-be-archived block data in the consensus blockchain node to a third-party storage server for archiving comprises:
obtaining, by the client based on the feedback information, the to-be-archived block data in the consensus blockchain node, and uploading the to-be-archived block data to the third-party storage server for archiving; or
sending, by the client, a block uploading request to the consensus blockchain node based on the feedback information, wherein the consensus blockchain node uploads, based on the block uploading request, the to-be-archived block data to the third-party storage server for archiving.

13. The method according to any one of claims 10 to 12, further comprising:
receiving, by the client, an archiving success result fed back by the third-party storage server, and generating an archiving transaction; and
sending, by the client, the archiving transaction to the third blockchain node, wherein the third blockchain node checks whether the archiving transaction is an archiving transaction of a blockchain node in a same group, and if the archiving transaction is the archiving transaction of the blockchain node in the same group, deletes block data corresponding to the archiving transaction; or checks whether the archiving transaction is an archiving transaction of another blockchain node in the blockchain, and if the archiving transaction is the archiving transaction of the one or more other blockchain nodes in the blockchain, deletes block data corresponding to the archiving transaction.

14. A block data archiving method, wherein the method comprises:
sending, by a consensus negotiation node, feedback information to a client, wherein the consensus negotiation node is a blockchain node determined through consensus negotiation between third blockchain nodes that receive an archiving request sent by the client, and the third blockchain node is a blockchain node with a resource of a block stored in the third blockchain node meeting a block data archiving condition; and
uploading, by the consensus negotiation node based on a request of the client, to-be-archived block data to a third-party storage server for archiving.

15. The method according to claim 14, wherein the uploading, by the consensus negotiation node based on a request of the client, to-be-archived block data to a third-party storage server for archiving comprises:
receiving, by the consensus negotiation node, an obtaining request sent by the client, and sending determined to-be-archived block data to the client, wherein the client uploads the to-be-archived block data to the third-party storage server for archiving; or
receiving, by the consensus negotiation node, a block uploading request sent by the client, and uploading determined to-be-archived block data to the third-party storage server for archiving.

16. A first blockchain node, comprising:
an event center, configured to determine to-be-archived block data when detecting that a resource of a block stored in the first blockchain node meets a block data archiving condition;
a consensus unit, configured to: send an archiving request to one or more other blockchain nodes, and negotiate a consensus with the one or more other blockchain nodes based on received consensus response information fed back by the one or more other blockchain nodes, wherein a block management unit is executed if it is determined that a consensus is reached and a consensus result that the first blockchain node is a consensus blockchain node is obtained, wherein the consensus result is used to determine that the first blockchain node or any one of the one or more other blockchain nodes is a consensus blockchain node; and
the block management unit, configured to send the to-be-archived block data to a third-party storage server for archiving.

17. The blockchain node according to claim 16, wherein the event center is configured to: monitor whether a quantity of blocks stored in the first blockchain node is greater than a preset block quantity; and if the quantity of blocks stored in the first blockchain node is greater than the preset block quantity, determine that the block data archiving condition is met, and obtain the to-be-archived block data; or
the event center is configured to: monitor whether a resource usage of the block stored in the first blockchain node is greater than a preset usage, wherein the block resource usage is an absolute value of disk space occupied by the stored block; and if the resource usage of the block stored in the first blockchain node is greater than the preset usage, determine that the block data archiving condition is met, and obtain the to-be-archived block data; or
the event center is configured to: monitor whether a resource usage rate of the block stored in the first blockchain node is greater than a preset usage rate, wherein the block resource usage rate is a relative value of disk space occupied by the stored block; and if the resource usage rate of the block stored in the first blockchain node is greater than the preset usage rate, determine that the block data archiving condition is met, and obtain the to-be-archived block data; or
the event center is configured to: monitor a creation time of the block stored in the first blockchain node, to determine whether there is a block whose creation time is greater than a preset time; and if there is the block whose creation time is greater than the preset time, determine that the block data archiving condition is met, and obtain data of the block whose block creation time is greater than the preset time.

18. The blockchain node according to claim 16 or 17, wherein the consensus unit that negotiates a consensus with the one or more other blockchain nodes based on the received consensus response information fed back by the is configured to: obtain consensus negotiation information in the consensus response information, and compare the consensus negotiation information with consensus negotiation information of the first blockchain node; and if a comparison result is consistent, determine that the consensus is reached, and obtain a consensus result determined by a specific consensus blockchain node based on the consensus negotiation information, wherein the consensus negotiation information comprises the to-be-archived block data, information about whether to-be-archived block data is consistent, and the specific consensus blockchain node.

19. The blockchain node according to any one of claims 16 to 18, further comprising:
an archive management unit, configured to: receive an archiving result fed back by the third-party storage server, and send the archiving result to the one or more other blockchain nodes.

20. A second blockchain node, comprising:
an event center, configured to: receive an archiving request sent by a first blockchain node, and determine to-be-archived block data when finding, based on the archiving request, that a resource of a block stored in the second blockchain node meets a block data archiving condition;
a consensus unit, configured to: feed back consensus response information to the first blockchain node, and negotiate a consensus with a blockchain node in a same group based on the consensus response information, wherein a block management unit is executed if it is determined that a consensus is reached, and a consensus result that the second blockchain node is a consensus blockchain node is obtained, wherein the consensus result is used to determine that the first blockchain node or any one of one or more other blockchain nodes is a consensus blockchain node; and
the block management unit, configured to send the to-be-archived block data to a third-party storage server for archiving.

21. The blockchain node according to claim 20, wherein the event center is configured to: receive the archiving request sent by the first blockchain node and query whether a quantity of blocks stored in the second blockchain node is greater than a preset block quantity; and if the quantity of blocks stored in the second blockchain node is greater than the preset block quantity, determine that the block data archiving condition is met, and obtain the to-be-archived block data; or
the event center is configured to: receive the archiving request sent by the first blockchain node, and query whether a resource usage of the block stored in the second blockchain node is greater than a preset usage, wherein the block resource usage is an absolute value of disk space occupied by the stored block; and if the resource usage of the block stored in the second blockchain node is greater than the preset usage, determine that the block data archiving condition is met, and obtain the to-be-archived block data; or
the event center is configured to: receive the archiving request sent by the first blockchain node, and query whether a resource usage rate of the block stored in the second blockchain node is greater than a preset usage rate, wherein the block resource usage rate is a relative value of disk space occupied by the stored block; and if the resource usage rate of the block stored in the second blockchain node is greater than the preset usage rate, determine that the block data archiving condition is met, and obtain the to-be-archived block data; or
the event center is configured to: receive the archiving request sent by the first blockchain node, and query a creation time of the block stored in the second blockchain node, to determine whether there is a block whose creation time is greater than a preset time; and if there is the block whose creation time is greater than the preset time, determine that the block data archiving condition is met, and obtain data of the block whose block creation time is greater than the preset time.

22. The blockchain node according to claim 20 or 21, further comprising:
an archive management unit, configured to: receive an archiving result fed back by the third-party storage server, and send the archiving result to the one or more other blockchain nodes.

23. The blockchain node according to any one of claims 20 to 22, the consensus unit that feeds back the consensus response information to the first blockchain node and negotiates the consensus with the one or more other blockchain nodes based on the consensus response information is configured to: feed back the consensus response information to the first blockchain node, wherein the consensus response information comprises consensus negotiation information, and the consensus negotiation information comprises the to-be-archived block data, whether the to-be-archived block data is consistent, and a specific consensus blockchain node; compare the consensus negotiation information with consensus negotiation information of the one or more other blockchain nodes; and if a comparison result is consistent, determine that the consensus is reached, and obtain a consensus result determined by the specific consensus blockchain node based on the consensus negotiation information.

24. A client, comprising:
a sending unit, configured to send an archiving request to a blockchain node in a blockchain;
a receiving unit, configured to receive feedback information of a consensus blockchain node, wherein the consensus blockchain node is a blockchain node determined through a consensus between third blockchain nodes that receive the archiving request, and the third blockchain node is a blockchain node with a resource of a block stored in the third blockchain node meeting a block data archiving condition; and
a processing unit, configured to upload, based on the feedback information, to-be-archived block data in the consensus blockchain node to a third-party storage server for archiving.

25. A consensus negotiation node, wherein the consensus negotiation node is a blockchain node determined through consensus negotiation between third blockchain nodes that receive an archiving request sent by a client, the third blockchain node is a blockchain node with a resource of a block stored in the third blockchain node meeting a block data archiving condition, and the consensus negotiation node comprises:
a transceiver unit, configured to send feedback information to the client, and receive a request of the client; and
a processing unit, configured to upload, based on the request of the client, to-be-archived block data to a third-party storage server for archiving.

26. A blockchain system, comprising the first blockchain node according to any one of claims 17 to 20 and the second blockchain node according to any one of claims 21 to 24.

27. A blockchain system, comprising:
a client, configured to: send an archiving request to a blockchain node in a blockchain; receive feedback information of a third blockchain node, wherein the third blockchain node is a blockchain node with a resource of a block stored in the third blockchain node meeting a block data archiving condition; and send a request to a blockchain node; and
the blockchain node, configured to: when a resource of a block stored in the blockchain node meets the block data archiving condition, and it is determined, through consensus negotiation with one or more other blockchain nodes that meets the block data archiving condition, that the blockchain node is a consensus negotiation node, send feedback information to the client, and upload, based on a request of the client, to-be-archived block data to a third-party storage server for archiving.

28. A computer-readable storage medium, comprising an instruction, wherein when the instruction is run on a computer, the computer is enabled to perform the method according to any one of claims 1 to 15.
